# EUROPÄISCHE PATENTSCHRIFT

(11) **EP 0 561 151 B1**
(45) Veröffentlichungstag und Bekanntmachung des Hinweises auf die Patenterteilung: **07.05.1997**
(21) Anmeldenummer: 93101996.2
(22) Anmeldetag: 09.02.1993
(51) Int. Cl.: B29C 70/08, B29K 105/06

(54) **Verfahren zur Herstellung von Trägern aus faserverstärkten Kunststoffen für Kraftfahrzeug-Stossfänger sowie derartige Träger**
Method for producing beams of fibrereinforced plastics material for motorcar bumpers and such beams
Procédé pour la fabrication de supports en matières synthétiques renforcées de fibres pour pare-choc de véhicules ainsi que supports similaires

(30) Priorität: 18.03.1992 DE 4208670
(43) Veröffentlichungstag der Anmeldung: 22.09.1993
(73) Patentinhaber: PEGUFORM-WERKE GMBH, 79268 Bötzingen (DE)
(72) Erfinder: Tatomir, Michael, W-7833 Endingen (DE); Freystedt, Bernd, W-7805 Bötzingen (DE)
(74) Vertreter: Rackette, Karl, Dipl.-Phys. Dr.-Ing

(56) Entgegenhaltungen:
- DE-A- 2 357 112
- DE-A- 2 461 706
- DE-A- 3 223 093
- US-A- 4 622 192
- US-A- 4 681 722

## Beschreibung

Die Erfindung betrifft ein Verfahren zur kontinuierlichen Herstellung von faserverstärkten, thermoplastischen Kunststoffteilen wie Trägern für Kraftfahrzeug-Stoßfänger, bei dem in einem Imprägnierwerkzeug Faserverstärkungselemente in eine Matrix aus Kunststoffmaterial eingebettet werden und im Extrusionswerkzeug die gewünschte Profilform erzeugt wird, bei dem in dem Imprägnierwerkzeug ein in seinem Aufbau der späteren Anordnung im fertigen Profil entsprechender Verstärkungskörper aus kontinuierlich zusammengeführten, aus Fasern gebildeten Schläuchen, Bändern oder Fäden zusammengestellt wird und bei dem der so gebildete verstärkte Kunststoffstrang aus dem Extrusionswerkzeug unter Kraftaufwand abgezogen wird, und betrifft weiterhin einen Träger mit einem Doppel-T-Profil.

Ein derartiges Verfahren ist aus der US-4,681,722 bekannt, mit dem verstärkte lineare Profile hergestellt werden. Dabei werden Verstärkungselemente Von Spulen abgewickelt und zusammengeführt. Dabei entsteht ein in seiner Form und Geometrie des Profils vorgegebenes lineares Strukturelement, der für Anforderungen des Designs und der aerodynamischen Gestaltung des Kraftfahrzeugs wenig Möglichkeiten läßt und auf die bei Stößen auftretenden Belastungen nicht ausgelegt ist.

Aus der DE-A-24 61 706 ist ein Verfahren zur Herstellung von verstärkten Profilen durch einen Ziehvorgang und eine Vorrichtung zur Durchführung dieses Verfahrens bekannt. Mit diesem bekannten Verfahren wird kontinuierlich ein Kunststoffstrang erzeugt, in welchem ein Verstärkungskörper entsprechend den Belastungsrichtungen ausgerichet ist.

Die heutigen Kraftfahrzeuge, insbesondere Personenwagen, müssen erhöhten Sicherheitsanforderungen genügen. Zu den entsprechenden Sicherheitsvorkehrungen gehört auch der Stoßfänger am vorderen bzw. hinteren Ende des Fahrzeuges, der bei Kollisionen einen nicht geringen Teil der kinetischen Energie abfangen und umwandeln soll.

Da die Fahrzeuge immer leichter und damit Kraftstoff sparender konzipiert werden, muß für die Stoßfänger eine intelligente Lösung gefunden werden, durch die einerseits das Kriterium "geringes Gewicht", andererseits "größtmögliche Stablität" erfüllt wird.

Die heutigen Stoßfänger bestehen aus einem Träger, der an Pralldämpfern befestigt ist, die am Fahrgestell bzw. an der Karosserie angebracht sind. Vor dem Träger ist ein Energie absorbierendes Schaumteil angeordnet. Das ganze ist mit einer Kunststoffhaut verkleidet, die in das Karossiedesign integriert ist. Während diese Außenhaut somit im wesentlichen unter dem Gesichtspunkt der Ästhetik und der Aerodynamik zu sehen ist, ist der Träger für die mechanischen Eigenschaften des Stoßfängers verantwortlich.

Üblich waren bisher u. a. Stahlträger. Diese haben jedoch neben dem relativ hohen Eigengewicht den weiteren Nachteil der geringen reversiblen Verformbarkeit. Darüber hinaus sind die Werkzeugkosten, die bei seiner Herstellung anfallen, zu hoch. Es handelt sich bei dem Stahlträger in der Regel um ein Preßteil, das aus einem Blechzuschnitt in einem relativ kompliziert gestalteten Werkzeug gefertigt wird.

Somit ist man dazu übergegangen, den Träger aus Kunststoff herzustellen. Da ist zunächst einmal das sogenannte SMC-Verfahren (Sheet Moulding Compound) zu nennen, bei dem mit Polyester-Harz getränkte Glasfasermatten in einem beheizten Werkzeug unter Druck ausgehärtet und vernetzt werden.

Wie schon beim oben angesprochenen Stahlträger sind auch hier die Werkzeugkosten hoch. Daneben ist durch das zeitaufwendige Einlegen der getränkten Glasfasermatten die Zykluszeit sehr hoch. Auch sind die physikalischen Eigenschaften des so hergestellten Trägers durch das besondere Herstellungsverfahren nicht vollständig kontrollierbar. Weitere Nachteile dieses Verfahrens liegen in einer aufwendigen Nachbearbeitung, bei der gesundheitsschädlicher Staub anfällt, und in der Verwendung von Styrolen, wodurch sich Recycling-Probleme ergeben.

Ein Teil dieser Nachteile tritt auch bei dem sogenannten GMT-Verfahren (Glasmatten (verstärkte) Thermoplaste) auf. Im Gegensatz zum SMC-Verfahren besteht hier die Matrix aus Thermoplast, welcher unter Wärme erneut umgeformt werden kann. Es kann somit ein Halbzeug hergestellt werden, das später weiter bearbeitet werden kann, indem es erneut erwärmt und in das Werkzeug eingelegt wird. Dort wird es unter Druck umgeformt und anschließend im Werkzeug abgekühlt. Es fallen jedoch wieder hohe Werkzeugkosten an und die physikalischen Eigenschaften des so hergestellten Trägers sind ebenfalls nicht vollständig kontrollierbar, da in dem GMT-Halbzeug zur Verstärkung ungerichtete Fasern vorgesehen sind.

Ein weiteres bekanntes Verfahren ist das Blasformen. Bei diesem Verfahren ist es möglich, geschlossene und somit stabile Querschnitte herzustellen. Es ist jedoch nicht möglich, Verstärkungen im Kunststoff anzuordnen. Daher müssen die Kunststoffwände entsprechend dicker sein, was ein hohes Gewicht und hohe Materialpreise mit sich bringt.

Das trifft auf alle anderen bekannten Kunststofflösungen ebenfalls zu. Bei den faserverstärkten Werkstoffen liegt das auch an der oben angesprochenen unzureichenden Ausnutzung der Fasereigenschaften, da die Fasern ungerichtet in der Matrix liegen.

Der gemeinsame Nachteil bei fast allen diesen bekannten Verfahren ist der, daß nur intermittierend produziert werden kann, nämlich indem ein Halbzeug in die Form eingelegt wird, geformt wird, das fertige Teil entnommen wird und der Zyklus von neuem begonnen wird.

Ausgehend von diesem Stand der Technik liegt der Erfindung die Aufgabe zugrunde, ein Verfahren der eingangs genannten Art so zu führen, daß auch ein Profil mit geeignetem komplizierterem Querschnitt mit genau auf die späteren Einsatzbedingungen abgestimmten Verstärkungen kontinuierlich hergestellt werden kann.

Diese Aufgabe wird erfindungsgemäß für ein Verfahren gemäß dem Oberbegriff des Anspruchs 1 dadurch gelöst, daß das fertige Profil ein Doppel-T-Träger ist, daß in zug- und druckbelasteten Trägerbereichen die Fasern bzw. Fäden in sich kreuzender Weise angeordnet werden, wobei die Fasern bzw. Fäden jeweils in einem Winkel von 45 Grad zur Längsachse des Doppel-T-Trägers verlaufen, und daß in die faserverstärkte Kunststoffmatrix zur weiteren Verstärkung ein vorgefertigtes, faserverstärktes Kunststoffband eingefügt wird.

Mit Hilfe der Merkmale des genannten Verfahrens ist es möglich, die Verstärkungen nach Anordnung und Materialauswahl genau dort im Träger anzuordnen, wo sie auch benötigt werden, so daß einem Träger maximale Stabilität bei trotzdem leichter Bauweise gegeben werden kann. Dazu dienen die sich im 45 Grad Winkel zur Längsachse kreuzenden Fasern im Ober-, Unterflansch, bzw. im Steg Druck- und Stoßbelastungen werden zusätzlich durch ein eingelegtes Kunststoffband im Steg aufgefangen.

Vorteilhafterweise werden im Ober- und im Unterflansch in der Längsachse des Trägers ausgerichtete Fasern vorgesehen.

Mit diesem Verfahren ist eine kontinuierliche Herstellung von Trägern möglich. Das hat zum einen den Vorteil, daß die Produktionsgeschwindigkeit gegenüber anderen bekannten Verfahren erhöht werden kann. Das hat zum anderen den Vorteil, daß
sich durch die Kontinuität des Verfahrens die Herstellungsparameter (Temperatur, Viskosität, Zuführung der Verstärkungsmittel) genauer einstellen und leichter regeln lassen.

Durch das gerichtete Einbetten der Verstärkungsmittel werden die Eigenschaften derartiger Mittel erheblich besser ausgenutzt. So ist vorgesehen, daß zur Aufnahme von Zug- und Druckkräften die Ausrichtung der Verstärkungsmittel parallel zur Kraftrichtung gewählt wird. In Bereichen des Trägers, in dem vorwiegend Schubkräfte übertragen werden, wie z.B. im Steg eines als Doppel-T-Profils ausgebildeten Trägers, werden die Verstärkungsmittel hingegen so ausgerichtet, daß ein Teil der Verstärkungsmittel unter einem Winkel von 45° zur Längsrichtung des Trägers angeordnet sind, während der andere Teil der Verstärkungsmittel senkrecht dazu in der gleichen Ebene angeordnet ist.

Um quasi isotrope Eigenschaften im Träger zu verwirklichen, wählt man beispielsweise einen Lagenaufbau, wobei eine Lage mit unidirektionaler Richtung der Verstärkungsmittel mit einer Lage abwechselt, in der die Verstärkungsmittel wie oben ausgeführt kreuzweise angeordnet sind. Zusätzlich kann hierbei auch das Verstärkungsmaterial je nach Belastung gewählt werden. Ein derartiger Aufbau wird Faser-Hybridaufbau genannt, bei dem Fasern unterschiedlichen Materials (Glas, Aramid, Kohle) entweder in verschiedenen Lagen oder aber abschnittsweise nebeneinander eingesetzt werden (z.B. bei einem Gewebe als Kettfaden Kohlefasern und als Schußfaden Aramidfasern).

Zusätzlich kann zur Stabiliserung des Profils in Bereichen besonders starker Belastungen ein sogenantes kaltes Band eingelegt werden. Ein kaltes Band ist ein Halbzeug, das ebenfalls aus faserverstärktem Kunststoff besteht, das beim Extrudieren von der warmen Kunststoffmatrix, die ebenfalls wiederum verstärkt ist, umhüllt wird.

Nachdem der so erzeugte verstärkte Kunststoffstrang eine ausreichende Länge erreicht hat, wird er mit Hilfe einer mitlaufenden Säge in der gewünschten Länge abgeschnitten.
Eine weitere Nachbearbeitung ist nicht notwendig.

Da bei jedem Fahrzeug die geometrischen Verhältnisse ein wenig anders sind, insbesondere der zur Verfügung stehende Einbauraum und die Belastung unterschiedlich sein können, kann der erfindungsgemäße Träger sowohl als gerades, als auch als leicht gekrümmtes Element hergestellt werden. Im letzten Fall erfolgt die Krümmung vorteilhafterweise gleichzeitig mit dem Abziehen des Kunststoffstranges in der Abziehvorrichtung.

Die Erfindung wird anhand von Zeichnungen im folgenden näher beschrieben.

Es zeigen:
- Fig. 1: in Explosionsdarstellung eine erste Ausführungsform eines Stoßfängers,
- Fig. 2: eine alternative Ausführungsform eines Stoßfängers gemäß Fig. 1,
- Fig. 3: eine schematische Darstellung des Verfahrensablaufes,
- Fig. 4: eine Darstellung der Belastungsarten am Beispiel eines Doppel-T-Trägers,
- Fig. 5: einen Querschnitt durch einen erfindungsgemäßen Träger,
- Fig. 6: Doppel-T-Träger mit Kaltbandverstärkung,
- Fig. 7: verschiedene Verstärkungsarten.

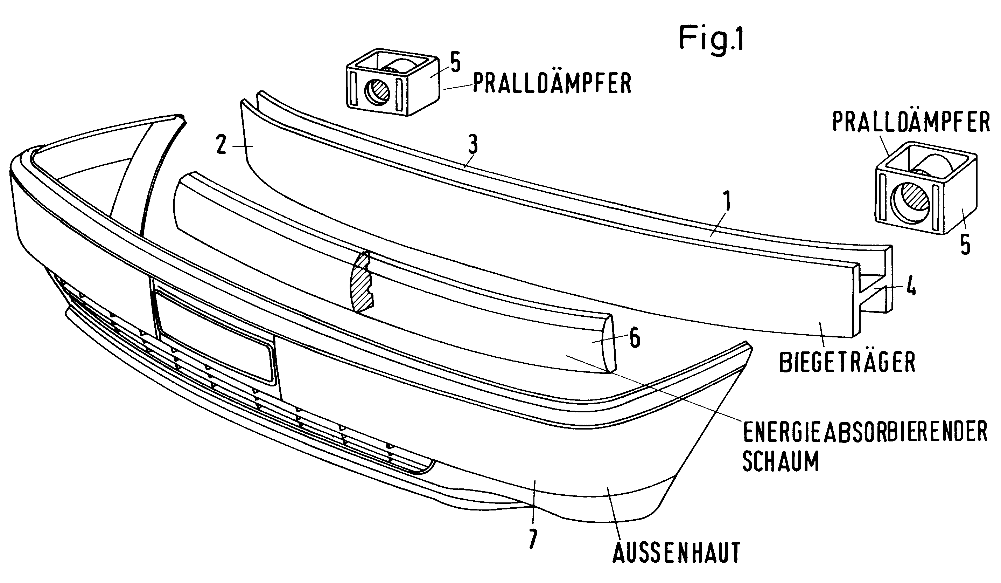

In der Fig. 1 ist ein Träger für einen Kraftfahrzeug-Stoßfänger mit den Bezugszeichen 1 versehen. Es handelt sich um ein Doppel-T-Profil aus Kunststoff mit einem Oberflansch 2, dem Unterflansch 3 sowie einem diese verbindenden Steg 4. Der Träger 1 ist im Verlauf seiner Längsachse leicht gekrümmt. Er wird an zwei Pralldämpfern 5 befestigt, die am Fahrzeug angeordnet sind. Auf dem Oberflansch 2 des Trägers 1 wird eine Leiste 6 aus Energie absorbierendem Schaum angeordnet. Das ganze wird abgedeckt durch ein schalenförmiges Formteil 7.

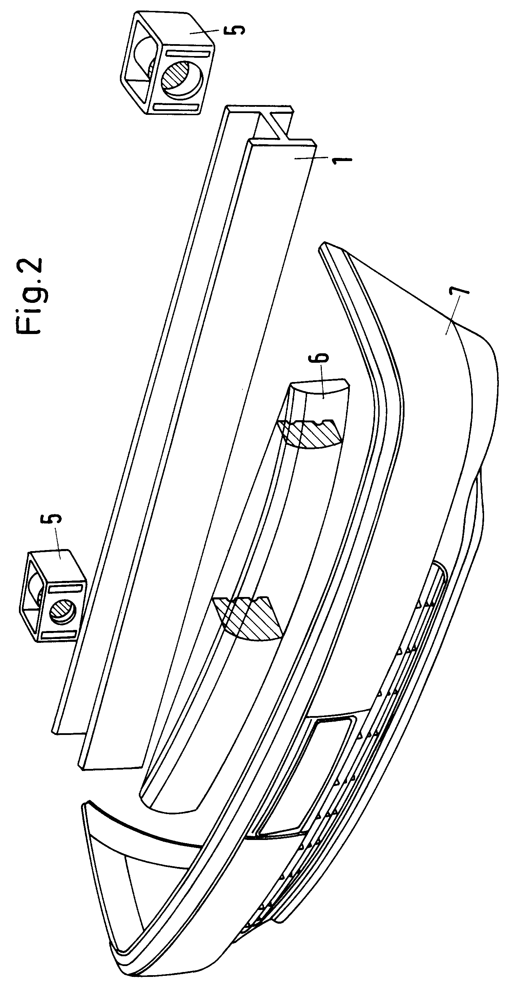

In der Fig. 2 ist die gleiche Anordnung dargestellt, wobei jedoch der Träger 1 gerade ausgeführt ist und die Leiste 6 in ihrem Mittelteil dicker ausgebildet ist als an den Rändern.

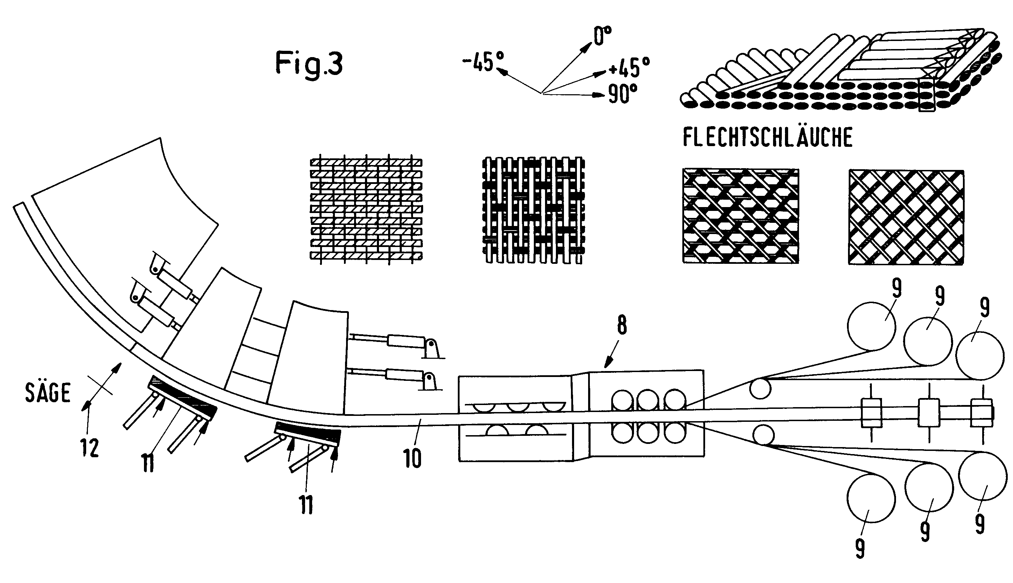

In der Fig. 3 ist skizzenhaft eine Vorrichtung zur Durchführung des erfindungsgemäßen Verfahrens dargestellt. Mit dem Bezugszeichen 8 ist allgemein der Extruder mit dem Formwerkzeug bezeichnet. Mit dem Bezugszeichen 9 sind Rollen bzw. Spulen bezeichnet, von denen die Verstärkungsmittel in Form von Fasern, Garnen, Bändern oder auch Schläuchen abgewickelt werden, die so in den Strom des noch flüssigen Kunststoffs eingeleitet werden, daß sie zusammen mit diesem in der gewünschten Anordnung aus dem Formwerkzeug 8 austreten. Der ausgehärtete faser- oder gewebeverstärkte Kunststoffstrang 10, der durch das Formwerkzeug das gewünschte Profil erhalten hat, wird von dem Formwerkzeug mit Hilfe einer hydraulischen Zuganordnung 11 abgezogen und im vorliegenden Beispiel mit einer Krümmung versehen. Eine Säge 12, die lediglich durch den Doppelpfeil angedeutet ist, längt den Kunststoffstrang 10 in entsprechenden Längen ab. Die hydraulische Zuganordnung 11 besteht aus zwei Zug- und Formbackenpaaren, die den Kunststoffstrang abwechselnd pakken und vom Formwerkzeug 8 wegziehen.

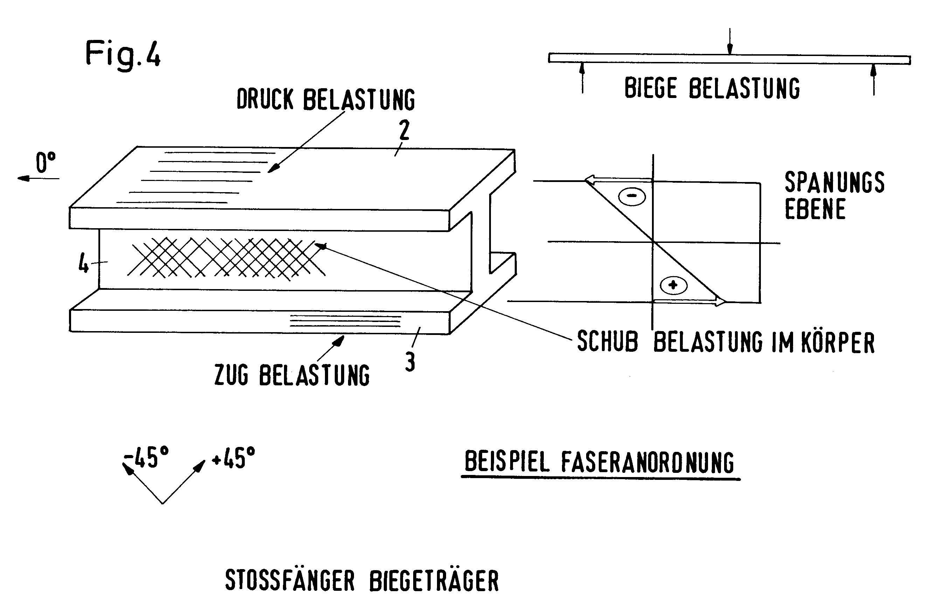

In der Fig. 4 ist ein Teilstück eines erfindungsgemäßen Trägers 1 dargestellt, an dessen Beispiel die auftretenden Belastungsarten schematisch dargestellt sind. Bei einer Biegebelastung, wobei wie im Bild rechts oben angedeutet, die Kraft mittig auf den an beiden Enden unterstützten Träger 1 angreift, kommt es im Oberflansch 2 zu einer Druckbelastung, im Unterflansch 3 dagegen zu einer Zugbelastung. Im Steg 4 ergibt sich dadurch eine Schubbelastung. Entsprechend den Kraftrichtungen der einzelnen Belastungen sind Verstärkungsfasern 9 angeordnet, die in der Zeichnung lediglich angedeutet sind. So verlaufen die Fasern im Ober- und Unterflansch 2, 3 in Kraftrichtung, während im Steg 4 die Fasern kreuzweise angeordnet sind. Sie verlaufen in Winkeln von +/- 45° zur Flanschebene.

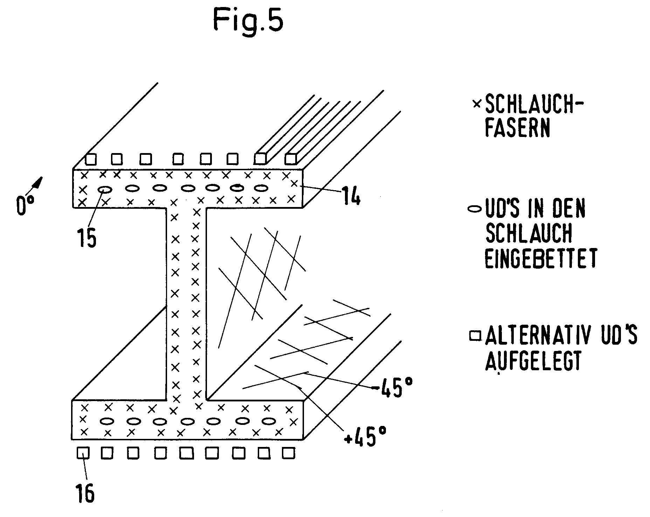

In der Fig. 5 ist schematisch und beispielhaft dargestellt, wie der Doppel-T-Träger verstärkt sein kann. Die Kreuzchen 14 deuten einen Gewebeschlauch an, der im Extrusionswerkzeug 8 entsprechend der Doppel-T-Form in der Kunststoffmatrix eingebettet ist. Die kleinen Kreise 15 deuten unidirektionale Fasern an, die in den Schlauch eingebettet sind. Die rechteckigen Kästchen 16 deuten eine Alternative an. Die unidirektionalen Fasern können auch auf den Schlauch im Bereich von Ober- und Unterflansch aufgelegt sein. Das Gewebe des Schlauchs ist so gestaltet, daß sich über den Verlauf des Trägers 1 die oben angesprochene kreuzweise Anordnung ergibt.

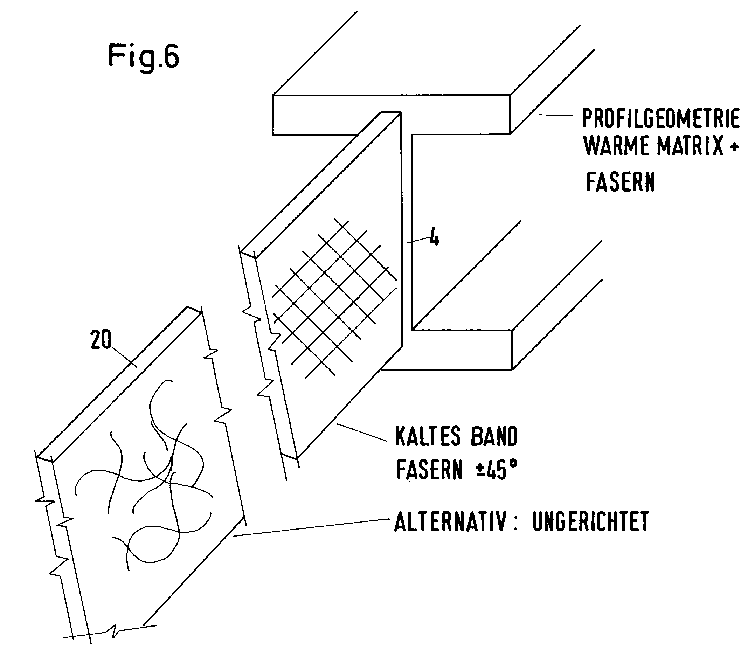

Eine andere Art der Verstärkung des beispielhaften Trägers ist in der Fig. 6 dargestellt. Im Bereich des Stegs 4 ist ein sogenanntes kaltes Band 20 angeordnet. Das kalte Band 20 ist ein Halbzeug, das aus einem faserverstärkten Kunststoffband besteht. Beim Extrudieren der Kunststoffmatrix wird dieses kalte Band von der Kunststoffmatrix umschlossen, die ihrerseits noch mit Verstärkungsmitteln versehen werden kann.

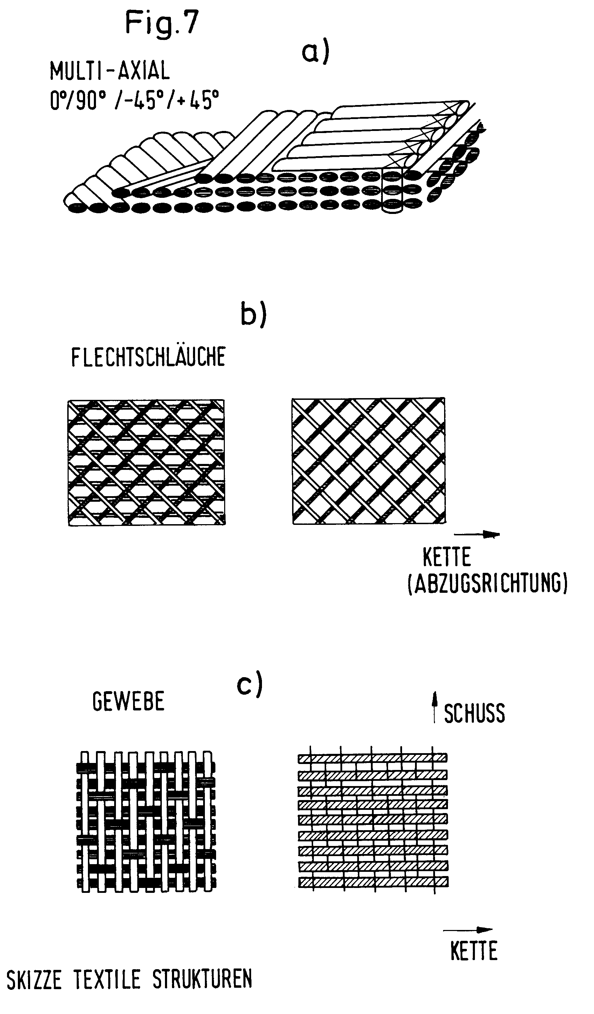

In der Fig. 7 sind einige Beispiele für Verstärkungsmittel dargestellt. In der Fig. 7a ist ein sogenannter Lagenaufbau dargestellt. Die unterste Lage besteht aus Verstärkungsfasern, die in einem Winkel von -45° angeordnet sind. Darüber befindet sich eine Lage von Verstärkungsfasern, die im Winkel von +45° angeordnet sind. Die dritte Lage wird durch Verstärkungsfasern gebildet, die im Winkel von 90° angeordnet sind, während die vierte Lage aus Verstärkungsfasern besteht, die im Winkel von 0° angeordnet sind. Die Winkel beziehen sich auf die Richtung der obersten Lage.

Die Fig. 7b zeigt zwei Beispiele von sogenannten Flechtschläuchen, während die Fig. 7c zwei Gewebearten zeigt. Die verarbeiteten Fasern bzw. Garne können dabei aus unterschiedlichem Material sein. Beispielsweise kann die Kette aus Glasfaser und der Schuß aus Kohlefaser sein. Es können auch Kombinationen aus Kohlefasern, Glasfasern und Aramidfasern sein. Das trifft ebenfalls auf die Lagenanordnung in Fig. 7a zu. Durch geschickte Kombination der Verstärkungsanordnungen und der Verstärkungsmaterialien ergibt sich im Zusammenhang mit der Kunststoffmatrix ein isotropes Bauteil.

Obwohl bei dem erfindungsgemäßen Träger in der Regel gerichtete Faseranordnungen vorgesehen sind, ist es jedoch auch möglich, zwischen Lagen gerichteter Fasern Lagen ungerichteter Fasern vorzusehen.

## Patentansprüche

1. Verfahren zur kontinuierlichen Herstellung von faserverstärkten, thermoplastischen Kunststoffteilen wie Trägern (1) für Kraftfahrzeug-Stoßfänger, bei dem in einem Imprägnierwerkzeug Faserverstärkungselemente (14, 15, 20) in eine Matrix aus Kunststoffmaterial eingebettet werden und im Extrusionswerkzeug die gewünschte Profilform erzeugt wird, bei dem in dem Imprägnierwerkzeug ein in seinem Aufbau der späteren Anordnung im fertigen Profil entsprechender Verstärkungskörper aus kontinuierlich zusammengeführten, aus Fasern gebildeten Schläuchen, Bändern oder Fäden (14, 15, 20) zusammengestellt wird und bei dem der so gebildete verstärkte Kunststoffstrang aus dem Extrusionswerkzeug unter Kraftaufwand abgezogen wird, **dadurch gekennzeichnet**, daß das fertige Profil ein Doppel-T-Träger ist, daß in zug- und druckbelasteten Trägerbereichen die Fasern bzw. Fäden (14, 15, 20) in sich kreuzender Weise angeordnet werden, wobei die Fasern bzw. Fäden (14, 15, 20) jeweils in einem Winkel von 45 Grad zur Längsachse des Doppel-T-Trägers verlaufen, und daß in die faserverstärkte Kunststoffmatrix zur weiteren Verstärkung ein vorgefertigtes, faserverstärktes Kunststoffband (20) eingefügt wird.

2. Verfahren nach Anspruch 1, dadurch gekennzeichnet, daß im Oberflansch (2) und im Unterflansch (3) des Doppel-T-Trägers ein weiterer Verstärkungskörper (15, 16) angeordnet wird, der in Richtung der Längsachse des Doppel-T-Trägers verläuft.

3. Träger mit einem Doppel-T-Profil hergestellt nach dem Verfahren nach einem der Ansprüche 1 oder 2, **dadurch gekennzeichnet**, daß die Fasern bzw. Fäden (14, 15, 20) im Oberflansch (2), im Unterflansch (3) sowie im Steg (4) jeweils in sich kreuzender Weise angeordnet sind und dabei jeweils in einem Winkel von 45 Grad zur Längsachse des Doppel-T-Trägers verlaufen und daß die Fasern bzw. Fäden (14, 15, 20) zur weiteren Verstärkung ein vorgefertigtes, faserverstärktes Kunststoffband (20) umgeben.

4. Träger nach Anspruch 3, dadurch gekennzeichnet, daß im Oberflansch (2) und im Unterflansch (3) des Doppel-T-Trägers ein weiterer Verstärkungskörper angeordnet ist, dessen Fasern in Richtung der Längsachse des Doppel-T-Trägers verlaufen.

5. Träger nach Anspruch 3 oder 4, dadurch gekennzeichnet, daß zwischen Lagen mit den besagten gerichteten Verstärkungen (9) ungerichtete Verstärkungen vorgesehen sind.

6. Träger nach einem der Ansprüche 3 bis 5, dadurch gekennzeichnet, daß die verschiedenen Verstärkungen (9) jeweils aus unterschiedlichem Material bestehen.

## Claims

1. A method of continuously producing fibre-reinforced thermoplastic parts such as bearers (1) for motor vehicle bumpers, in which fibre reinforcement elements (14, 15, 20) are embedded into a matrix of plastics material in an impregnation tool and the desired profile shape is produced in the extrusion tool, in which a reinforcement body corresponding in its structure to the later arrangement in the finished profile and comprising threads, strips or tubes (14, 15, 20) formed from fibres and continuously brought together is assembled in the impregnation tool, and in which the elongate reinforced plastics portion formed in that way is drawn out of the extrusion tool with the application of force, characterised in that the finished profile is a double-T-bearer, that the fibres or threads (14, 15, 20) are arranged in mutually crossing relationship in the bearer regions which are subjected to tensile and compressive loadings, the fibres or threads (14, 15, 20) respectively extending at an angle of 45° relative to the longitudinal axis of the double-T-bearer, and that a prefabricated, fibre-reinforced plastics strip (20) is inserted into the fibre-reinforced plastics matrix for further reinforcement.

2. A method according to claim 1 characterised in that arranged in the upper flange (2) and in the lower flange (3) of the double-T-bearer is a further reinforcement body (15, 16) which extends in the direction of the longitudinal axis of the double-T-bearer.

3. A bearer of a double-T-profile produced in accordance with the method according to one of claims 1 and 2 characterised in that the fibres or threads (14, 15, 20) in the upper flange (2), in the lower flange (3) and in the web (4) are respectively arranged in mutually crossing relationship and respectively extend at an angle of 45° relative to the longitudinal axis of the double-T-bearer and that the fibres or threads (14, 15, 20) surround a prefabricated, fibre-reinforced plastics strip (20) for further reinforcement.

4. A bearer according to claim 3 characterised in that arranged in the upper flange (2) and in the lower flange (3) of the double-T-bearer is a further reinforcement body whose fibres extend in the direction of the longitudinal axis of the double-T-bearer.

5. A bearer according to claim 3 or claim 4 characterised in that undirected reinforcements are provided between layers with said directed reinforcements (9).

6. A bearer according to one of claims 3 to 5 characterised in that the various reinforcements (9) respectively comprise different material.

## Revendications

1. Procédé pour fabriquer en continu des pièces en matière thermoplastique renforcée par des fibres, telles que des supports (1) pour pare-chocs de véhicules automobiles, selon lequel, dans un outil d'imprégnation, on enrobe des éléments de renfort formés de fibres (14,15,20), dans une matrice de matière plastique et on produit, dans l'outil d'extrusion, la forme de profilé désirée, et selon lequel, dans l'outil d'imprégnation, on assemble un corps de renfort, dont l'agencement correspond à la disposition ultérieure dans le profilé terminé, à partir de tuyaux, de bandes ou de fils (14,15,20) formés de fibres, et selon lequel on retire le boudin de matière plastique renforcé, ainsi formé, hors de l'outil d'extrusion moyennant l'application d'une force, caractérisé en ce que le profilé terminé est un support en T double, que les fibres ou les fils (14,15,20) sont disposés de manière à se croiser dans les parties du support sollicitées en traction et en compression, les fibres ou les fils (14,15,20) s'étendant respectivement sous un angle de 45 degrés par rapport à l'axe longitudinal du support en T double, et que pour obtenir un renfort supplémentaire, on insère une bande de matière plastique préfabriquée et renforcée de fibres (20) dans la matrice de matière plastique renforcée de fibres.

2. Procédé selon la revendication 1, caractérisé en ce qu'un autre corps de renfort (15,16), qui s'étend dans la direction de l'axe longitudinal du support en T double, est disposé dans l'aile supérieure (2) et dans l'aile inférieure (3) du support en T double.

3. Support ayant un profil en double T, fabriqué selon le procédé de l'une des revendications 1 ou 2, caractérisé en ce que les libres ou fils (14, 15, 20) dans l'aile supérieure (2), dans l'aile inférieure (3) ainsi que dans l'âme (4) sont disposés respectivement de façon croisée et se déplacent ainsi respectivement selon un angle de 45° par rapport à l'axe longitudinal du support en T double et en ce que les libres ou fils (14, 15, 20) sont entourés d'une bande de matière plastique préfabriquée et renforcée de fibres (20) en vue d'obtenir un renfort supplémentaire.

4. Support selon la revendication 3, caractérisé en ce que dans l'aile supérieure (2) et dans l'aile inférieure (3) du support en T double est disposé un autre corps de renfort dont les fibres s'étendent dans la direction de l'axe longitudinal du support en T double.

5. Support selon la revendication 3 ou 4, caractérisé en ce qu'entre les couches avec les renforts orientés de la façon indiquée (9), sont prévus des renforts non orientés.

6. Support selon l'une des revendications 3 à 5, caractérisé en ce que les différents renforts (9) consistent respectivement en différents matériaux.
